# DEMANDE DE BREVET EUROPEEN

(11) **EP 1 908 735 A1**
(43) Date de publication de la demande: **09.04.2008**
(21) Numéro de dépôt: 07116295.2
(22) Date de dépôt: 13.09.2007
(51) Int. Cl.: C03C 3/076, C03C 3/097, C03C 3/155, G02B 6/00, H01S 3/00

(54) **Fibre optique à gain raman large et plat**

(30) Priorité: 22.09.2006 FR 0653908
(71) Demandeur: Alcatel Lucent, 75008 Paris (FR)
(72) Inventeur: Burov, Ekaterina, 92100, Boulogne Billancourt (FR); Gasca, Laurent, 91140, Villebon sur Yvette (FR); Blanchandin, Stéphanie, 75015, Paris (FR); Collet, Christine, 91540, Mennecy (FR); Poumellec, Bertrand, 91190, Gif sur Yvette (FR); Manolescu, Gabriela, 91405, Orsay (RO); Favaro, Laurent, 75019, Paris (FR); Moreau, Christine, 91120, Palaiseau (FR)
(74) Mandataire: Shamsaei Far, Hassan

(57) **Abrégé**

Une composition de coeur de guide d'onde optique en verre silicaté composé majoritairement d'un mélange de quatre composants actifs pour l'amplification Raman
- un premier composant formant le verre qui est un oxyde de silicium à une concentration comprise entre 30 à 99% en mole du total de la composition,
- un deuxième composant choisi parmi un oxyde de tantale, un oxyde de vanadium, une combinaison d'un oxyde de tantale et d'un oxyde de vanadium, et une combinaison d'un oxyde de tantale et/ou d'un oxyde de vanadium avec un oxyde d'un autre métal de transition choisi dans les colonnes IB, IIB, IIIB, IVB, VIB, VIIB ou VIIIB du tableau périodique des éléments, le deuxième composant étant présent à une concentration non nulle et inférieure ou égale à 50% en mole du total de la composition,
- un troisième composant qui est un oxyde d'aluminium présent à une concentration non nulle et inférieure ou égale à 50% en mole du total de la composition,
- un quatrième composant qui est un oxyde choisi parmi un oxyde de niobium et un oxyde de lithium présent à une concentration non nulle et inférieure ou égale à 50% en mole du total de la composition.

## Description

La présente invention se rapporte au domaine des fibres optiques et plus particulièrement les fibres optiques actives pour l'amplification Raman.

Les amplificateurs Raman ont des propriétés intéressantes pour les systèmes de transmission optique à multiplexage en longueur d'onde (dite WDM pour « Wavelengh Division Multiplexing » en terminologie anglo-saxonne) du fait d'une bande passante importante, un bruit faible et une faible sensibilité aux variations de puissance d'entrée des signaux.

L'amplification Raman utilise classiquement la diffusion Raman stimulée. Chaque matériau présente un spectre d'émission Raman spontanée à des longueurs d'onde données, c'est-à-dire se comporte comme un ensemble d'oscillateurs de vibration à une fréquence donnée. Un spectre d'émission caractéristique du matériau peut donc être établi, avec des pics d'intensité à des longueurs d'onde données nommées raies de Stokes. Le spectre Raman d'un verre, comme d'un matériau amorphe désordonné, est caractérisé par un grand nombre de longueurs d'onde formant un spectre continu sur une large bande de fréquences.

L'intensité de l'émission Raman augmente avec la puissance d'entrée appliquée au matériau et devient significative à une puissance donnée. Donc, en stimulant le matériau par une forte puissance optique, par exemple un laser de pompe, le pic d'intensité correspondant à l'émission Raman spontanée peut atteindre 100% de l'intensité du signal de pompe à une longueur d'onde donnée. Il est ainsi possible, en exploitant l'émission Raman d'un matériau, d'amplifier fortement un signal optique en le faisant traverser le matériau stimulé par un signal optique de pompe. Dans ce type d'amplification, un photon de l'onde de la pompe perd son énergie pour créer un autre photon d'énergie moindre, donc de plus grande longueur d'onde et de fréquence plus faible (diffusion inélastique). Cependant, pour obtenir une amplification efficace, il est nécessaire d'utiliser une pompe optique de forte puissance et une fibre optique de longueur importante, ce qui rend les amplificateurs Raman coûteux. Il est donc nécessaire d'améliorer leurs performances pour les rendre compétitifs.

Pour accroître l'efficacité de l'amplification, il est connu de réduire la surface effective de la fibre optique pour augmenter le confinement et/ou doper fortement le coeur de la fibre avec un matériau à coefficient Raman élevé pour augmenter le gain. Dans l'état de l'art actuel, le dopage du coeur, s'il augmente l'efficacité de l'amplification, a cependant pour corollaire une augmentation des pertes.

Un laser Raman peut être généré en associant le milieu amplificateur Raman à des cavités de Fabry-Pérot adéquates. Les amplificateurs ou lasers Raman présentent donc un grand intérêt pour des applications dans des systèmes de transmission optique.

La plupart des amplificateurs ou lasers Raman utilisent des fibres à base de silice, de germano-silicate ou de phospho-silicate. Cependant les fibres d'amplification Raman à base de silice ou de germano-silicate présentent l'inconvénient d'une largeur de pic d'amplification réduite.

Le document EP-1 512 672 propose une fibre optique active pour amplification Raman comprenant un coeur contenant de l'oxyde de silice (SiO₂), de l'oxyde de lithium (Li₂O), de l'oxyde de germanium (GeO₂) et de l'oxyde de baryum (BaO), avec 30 à 90% en mole de SiO₂ et moins de 50% en mole de l'ensemble Li₂O, GeO₂ et BaO. De préférence le coeur comprend en outre moins de 40% en mole d'un dopant, tel qu'un composé alcalin ou alcalino-terreux. L'objectif de cette invention est la création d'un gain Raman tri-bande pour une amplification simultanée dans trois bandes de fréquence indépendantes. Un laser Raman tri-bande a été choisi comme exemple.

Afin d'améliorer la planéité et la largeur de bande du gain Raman, le document US-2004/0053768 propose une composition multi-composant en verre à base d'oxydes utilisable comme coeur d'un guide d'onde optique comprenant un composant formant le verre SiO₂ représentant 30 à 90% en mole, et deux composants actifs pour l'amplification Raman Li₂O et Nb₂O₅ représentant au plus 50% en mole de l'ensemble. Un dopant peut y être ajouté dans une proportion ne dépassant pas 40% en mole.

La présente invention propose une solution alternative pour l'obtention d'un spectre d'émission Raman comportant une seule bande intense, large et plate.

L'invention a donc pour but de proposer une composition utilisable comme matériau de coeur d'un guide d'onde optique dont le spectre d'émission Raman présente une intensité significativement plus élevée que celle des compositions à base de silice ou de germano-silice, sur une bande de fréquence plus large.

L'objet de la présente invention est une composition de coeur de guide d'onde optique en verre silicaté composé majoritairement d'un mélange de quatre composants actifs pour l'amplification Raman :
- un premier composant formant le verre qui est un oxyde de silicium à une concentration C₁ comprise entre 30 à 99% en mole du total de la composition : 30% ≤ C₁ ≤ 99%,
- un deuxième composant choisi parmi un oxyde de tantale, un oxyde de vanadium, une combinaison d'un oxyde de tantale et d'un oxyde de vanadium, et une combinaison d'un oxyde de tantale et/ou d'un oxyde de vanadium avec un oxyde d'un autre métal de transition choisi dans les colonnes IB, IIB, IIIB, IVB, VIB, VIIB ou VIIIB du tableau périodique des éléments, le deuxième composant étant présent à une concentration C₂ non nulle et inférieure ou égale à 50% en mole du total de la composition : 0% < C₂ ≤ 50%,
- un troisième composant qui est un oxyde d'aluminium présent à une concentration C₃ non nulle et inférieure ou égale à 50% en mole du total de la composition : 0% < C₃ ≤ 50%,
- un quatrième composant qui est un oxyde choisi parmi un oxyde de niobium et un oxyde de lithium présent à une concentration C₄ non nulle et inférieure ou égale à 50% en mole du total de la composition : 0% < C₄ ≤ 40%.

Le coeur du guide d'onde est constitué d'un verre multi-composant à base d'oxydes, comme par exemple de SiO₂, et contient un oxyde de tantale comme Ta₂O₅ et/ou de vanadium comme V₂O₅, auquel peut être combiné un oxyde d'un métal de transition appartenant à une autre colonne que les métaux Ta et V. On entend par les colonnes IB, IIB, IIIB, IVB, VIB, VIIB ou VIIIB du tableau périodique des éléments (version CAS), celles commençant par les éléments suivants (cf. HANDBOOK of CHEMISTRY and PHYSICS, 77th Edition, 1996-1997) :
- colonne IB : Cu, Ag, Au, ...
- colonne IIB : Zn, Cd, ...
- colonne IIIB : Sc, Y, ...
- colonne IVB : Ti, Zr, Hf, ...
- colonne VIB : Cr, Mo, W, ...
- colonne VIIB : Mn, Re, ...
- colonne VIIIB : Fe, Ru, Os, ...
   Co, Rh, Ir, ...
   Ni, Pd, Pt, ...

De préférence la concentration C₂ du deuxième composant actif pour l'amplification Raman est comprise entre 10 et 15% en mole du total de la composition: 10% ≤ C₂ ≤ 15%.

La composition comprend un troisième composant qui est un oxyde d'aluminium, ce qui a comme avantage de joindre l'influence d'un métal de transition sur la polarisation et de l'aluminium, permettant d'accroître le nombre de modes de vibrations et donc l'élargissement sur une large bande de fréquences.

Dans le cas où le quatrième composant est un oxyde de niobium (Nb₂O₅) la composition peut comprendre en outre un cinquième composant qui est au moins un oxyde choisi parmi Na₂O, K₂O, Rb₂O, Cs₂O, BeO, MgO, CaO, SrO, BaO, P₂O₅, B₂O₃, As₂O₃, GeO₂, TiO₂, ZrO₂, PbO, Bi₂O₃, MO₂O₃, WO₃, SnO₂, Ga₂O₃, In₂O₃, TeO₂, le cinquième composant étant présent à une concentration C₅ non nulle inférieure ou égale à 40% en mole du total de la composition : 0% < C₅ ≤ 40%.

Dans le cas où le quatrième composant est un oxyde de lithium (Li₂O), la composition peut comprendre en outre un cinquième composant qui est au moins un oxyde choisi parmi Na₂O, K₂O, Rb₂O, Cs₂O, BeO, MgO, CaO, SrO, P₂O₅, B₂O₃, As₂O₃ TiO₂, ZrO₂, PbO, Bi₂O₃, MO₂O₃, WO₃, SnO₂, Ga₂O₃, In₂O₃, TeO₂, le cinquième composant étant présent à une concentration C₅ non nulle inférieure ou égale à 40% en mole du total de la composition : 0% < C₅ ≤ 40%.

Alternativement dans le cas où le quatrième composant est l'oxyde de lithium (Li₂O), la composition peut comprendre en outre un cinquième composant qui est l'oxyde de germanium (GeO₂), le cinquième composant étant présent à une concentration C₅ non nulle inférieure ou égale à 40% en mole du total de la composition : 0% < C₅ ≤ 40%.

Selon une variante la composition selon l'invention peut aussi comprendre en outre en proportion mineure un composé qui est un sulfure.

L'invention a a aussi pour objet un guide d'onde comportant au moins un coeur et une gaine optique, dans lequel le coeur comprend la composition décrite précédemment.

On entend ici par "coeur" la région du guide où reste concentrée la majorité de la puissance optique des ondes se propageant dans le guide. Dans le cas par exemple où le guide est une simple fibre optique, le coeur se réduit à la zone centrale de la fibre qui correspond à la région ayant un fort indice par rapport à celui de sa zone périphérique, appelée gaine optique. Mais l'invention peut s'appliquer aussi à des guides ayant des structures de coeur plus complexes, tels que les fibres munies de coeurs et gaines concentriques multiples, ou des fibres optiques photonique (dite PCF pour « Photonic Crystal Fibers » en anglais), dont la gaine comporte des trous, ayant une composition de coeur selon l'invention.

L'invention a encore pour objet un amplificateur optique utilisant l'effet de diffusion Raman stimulée comprenant un guide d'onde, comportant au moins un coeur et ne gaine optique dans lequel le coeur comprend une composition telle que décrite précédemment, associé à une pompe optique.

L'invention a encore pour objet une source laser comprenant un tel amplificateur optique.

D'autres caractéristiques et avantages de la présente invention apparaîtront au cours de la description suivante, donnée bien entendu à titre illustratif et non limitatif, et dans le dessin annexé sur lequel la figure unique représente
- la figure 1 représente schématiquement un amplificateur comprenant un guide d'onde selon la présente invention,
- la figure 2 représente une fibre optique dont le coeur comprend une composition selon l'invention,
- la figure 3 montre le coefficient Raman du matériau normalisé sur le coefficient Raman de la silice, pour différentes compositions selon l'invention, le coefficient Raman R normalisé est donné en ordonnée et en abscisse la longueur d'onde L en cm⁻¹,
- la figure 4 représente schématiquement un laser Raman selon l'invention.

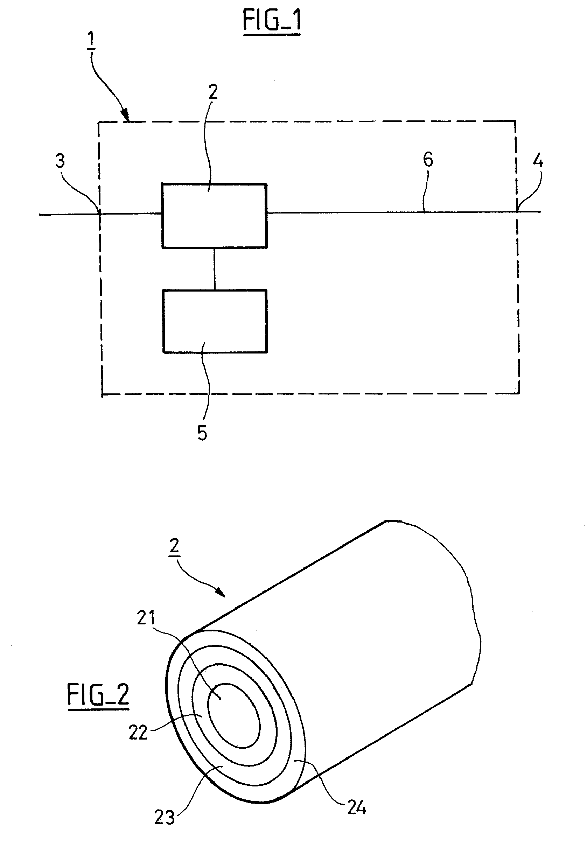

On a représenté schématiquement sur la figure 1 un amplificateur **1** comprenant un guide d'onde **2** selon l'invention. Cet amplificateur **1** comprend un port d'entrée **3** recevant le signal à amplifier et un port de sortie **4** destinés à être raccordés au guide d'onde **2,** tel qu'une fibre de ligne par exemple. L'amplificateur **1** se compose d'un guide d'onde **2** comme par exemple une fibre optique dopée, d'une source de pompage **5** et d'un coupleur optique **6.** La source de pompage **5** est en général un laser, et délivre un signal optique de pompage qui est injecté dans la fibre dopée **2** par le coupleur optique **6.** Ce signal optique de pompage est absorbé par le ou les dopants présents dans le coeur de la fibre optique **2** dopée qui, en se désexcitant, transfère une partie de l'énergie absorbée au signal optique qui se propage entre les ports **3** et **4** et amplifiant ainsi ce signal optique.

La fibre optique **2** dopée représentée sur la figure 2 comprend un coeur monomode **21** dans lequel se trouve le ou les dopants et dans lequel le signal optique de pompage est injecté. Elle peut comprendre aussi un coeur multimode **22,** entourant le coeur monomode **21,** pour recevoir le signal de pompage. Ce mode de réalisation présente l'avantage de permettre d'injecter un signal de pompage plus puissant et de réaliser un meilleur couplage entre le signal optique de pompage et le dopant. Le coeur monomode **21** et le coeur multimode **22** sont entourés d'une gaine optique **23.** La fibre optique 2 est généralement entourée d'un revêtement de protection **24.**

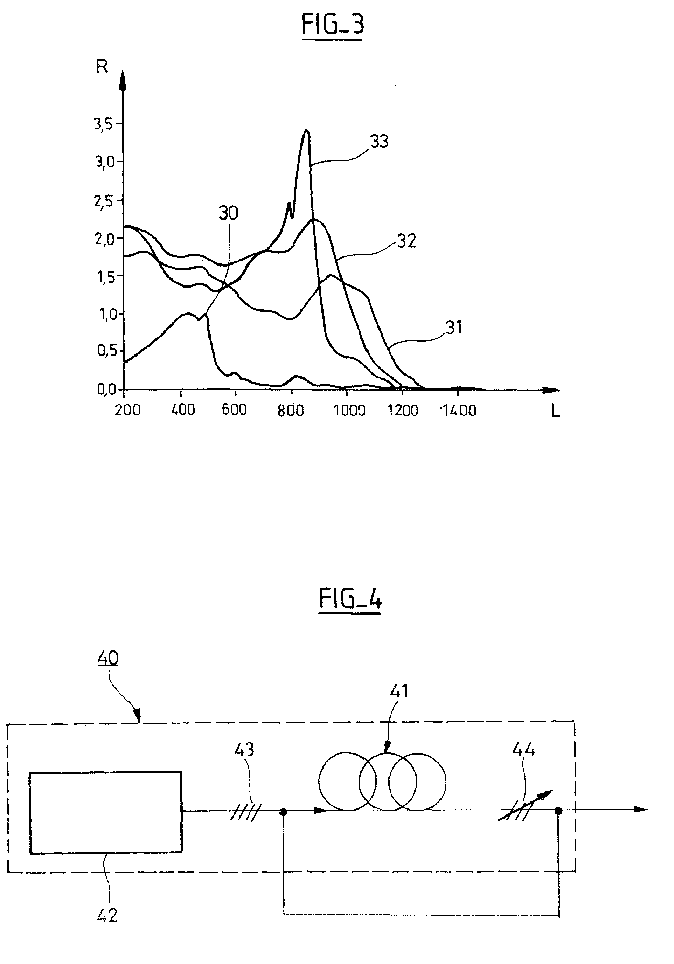

La figure 3 montre quatre courbes qui représentent les variations en fonction de la longueur d'onde L du coefficient Raman R du matériau, normalisé sur le coefficient Raman de la silice, respectivement pour des compositions différentes du matériau de coeur :
courbe **30** : SiO₂ seul servant de référence pour la comparaison,
courbe **31** : SiO₂ + 15% en mole de Ta codopé avec Al et Li,
courbe **32** : SiO₂ + 10% en mole de Nb codopé avec Al,
courbe **33** : composition de l'art antérieur selon le document EP-1 394 910 contenant SiO₂, Li₂O et Nb₂O₅.

Un laser Raman selon l'invention est illustré schématiquement sur la figure 4. Un tel laser **40** comprend une portion de fibre amplificatrice Raman **41** à laquelle est couplée une source de pompe **42** destinée à stimuler le milieu amplificateur Raman. Selon la longueur d'onde de la source de pompe **42** et la composition du matériau constituant le milieu amplificateur de la fibre Raman **41,** le laser **40** émet un signal optique à un longueur d'onde donnée.

La portion de fibre **41** est disposée entre deux éléments miroirs **43, 44** faisant office de facettes de la cavité laser. Un premier miroir **43** fortement réfléchissant aux longueurs d'onde considérées, tel qu'un réseau de Bragg droit par exemple, est disposé entre la pompe **42** et la fibre amplificatrice **41.** Ce miroir **43** transmet le signal de pompe vers la fibre **41** mais réfléchit toute contre-propagation de signaux lumineux de la fibre **41** vers la source de pompe **42.** Au moins un second miroir **44** est disposé en sortie de fibre **41.** Ce miroir **44** est faiblement réfléchissant, tel qu'un réseau de Bragg en angle par exemple, est constitue la facette de sortie du laser **40** selon l'invention.

## Revendications

1. Composition de coeur de guide d'onde optique en verre silicaté composé majoritairement d'un mélange de quatre composants actifs pour l'amplification Raman
- un premier composant formant le verre qui est un oxyde de silicium à une concentration comprise entre 30 à 99% en mole du total de la composition,
- un deuxième composant choisi parmi un oxyde de tantale, un oxyde de vanadium, une combinaison d'un oxyde de tantale et d'un oxyde de vanadium, et une combinaison d'un oxyde de tantale et/ou d'un oxyde de vanadium avec un oxyde d'un autre métal de transition choisi dans les colonnes IB, IIB, IIIB, IVB, VIB, VIIB ou VIIIB du tableau périodique des éléments, le deuxième composant étant présent à une concentration non nulle et inférieure ou égale à 50% en mole du total de la composition,
- un troisième composant qui est un oxyde d'aluminium présent à une concentration non nulle et inférieure ou égale à 50% en mole du total de la composition,
- un quatrième composant qui est un oxyde choisi parmi un oxyde de niobium et un oxyde de lithium présent à une concentration non nulle et inférieure ou égale à 50% en mole du total de la composition.

2. Composition selon la revendication 1, dans laquelle la concentration du deuxième composant est comprise entre 10 et 15% en mole du total.

3. Composition selon l'une des revendications 1 et 2, dans laquelle le quatrième composant est l'oxyde de niobium et comprenant en outre un cinquième composant qui est au moins un oxyde choisi parmi Na₂O, K₂O, Rb₂O, Cs₂O, BeO, MgO, CaO, SrO, BaO, P₂O₅, B₂O₃, As₂O₃ GeO₂, TiO₂, ZrO₂, PbO, Bi₂O₃, Mo₂O₃, WO₃ SnO₂, Ga₂O₃, In₂O₃, TeO₂, le cinquième composant étant présent à une concentration non nulle inférieure ou égale à 40% en mole du total de la composition.

4. Composition selon l'une des revendications 1 et 2, dans laquelle le quatrième composant est l'oxyde de lithium et comprenant en outre un cinquième composant qui est au moins un oxyde choisi parm Na₂O, K₂O, Rb₂O, Cs₂O, BeO, MgO, CaO, SrO, P₂O₅, B₂O₃, As₂O₃ TiO₂ ZrO₂, PbO, Bi₂O₃, Mo₂O₃, WO₃, SnO₂, Ga₂O₃, In₂O₃, TeO₂, le cinquième composant étant présent à une concentration non nulle inférieure ou égale à 40% en mole du total de la composition.

5. Composition selon l'une des revendications 1 et 2, dans laquelle le quatrième composant est l'oxyde de lithium et comprenant en outre un cinquième composant qui est l'oxyde de germanium, le cinquième composant étant présent à une concentration non nulle inférieure ou égale à 40% en mole du total de la composition.

6. Composition selon l'une des revendications précédentes, comprenant en outre en proportion mineure un composé qui est un sulfure.

7. Guide d'onde comportant au moins un coeur et une gaine optique, dans lequel le coeur comprend une composition selon l'une des revendications précédentes,

8. Amplificateur optique utilisant l'effet de diffusion Raman stimulée comprenant un guide d'onde selon la revendication 7, associé à une pompe optique.

9. Source laser comprenant un amplificateur optique selon la revendication 8.
